# EUROPÄISCHE PATENTSCHRIFT

(11) **EP 0 713 283 B1**
(45) Veröffentlichungstag und Bekanntmachung des Hinweises auf die Patenterteilung: **20.12.2000**
(21) Anmeldenummer: 95113115.0
(22) Anmeldetag: 21.08.1995
(51) Int. Cl.: H02K 5/24, F16F 15/08

(54) **Vorrichtung zur Halterung eines Elektromotors**
Supporting structure for an electric motor
Dispositif de support pour un moteur électrique

(30) Priorität: 15.11.1994 DE 9418283 U
(43) Veröffentlichungstag der Anmeldung: 22.05.1996
(73) Patentinhaber: ebm Werke GmbH & Co., 74673 Mulfingen (DE)
(72) Erfinder: Wengrzik. Heinz, D-97980 Bad Mergentheim-Markelsheim (DE)
(74) Vertreter: Patentanwälte Dr. Solf & Zapf

(56) Entgegenhaltungen:
- EP-A- 0 521 313
- GB-A- 770 102
- US-A- 2 296 221
- US-A- 2 729 846
- US-A- 3 235 653
- US-A- 3 509 393

## Beschreibung

Vorrichtung zur Halterung eines Elektromotors in einem Traggestell, wobei der Elektromotor zumindest auf einer Axialseite mit einem statorseitigen, axialen Lageransatz mittelbar über ein auf dem Lageransatz sitzendes, elastisches Aufnahmeelement an einer Wandung des Traggestells gehalten ist, wobei das elastische Aufnahmeelement in einer zur Motorachse koaxialen, etwa halbkreisförmigen, einseitig randoffenen Aufnahmeöffnung der Wandung des Traggestells sitzt und durch ein Spannelement in axialer und radialer Richtung in der Aufnahmeöffnung fixiert ist.

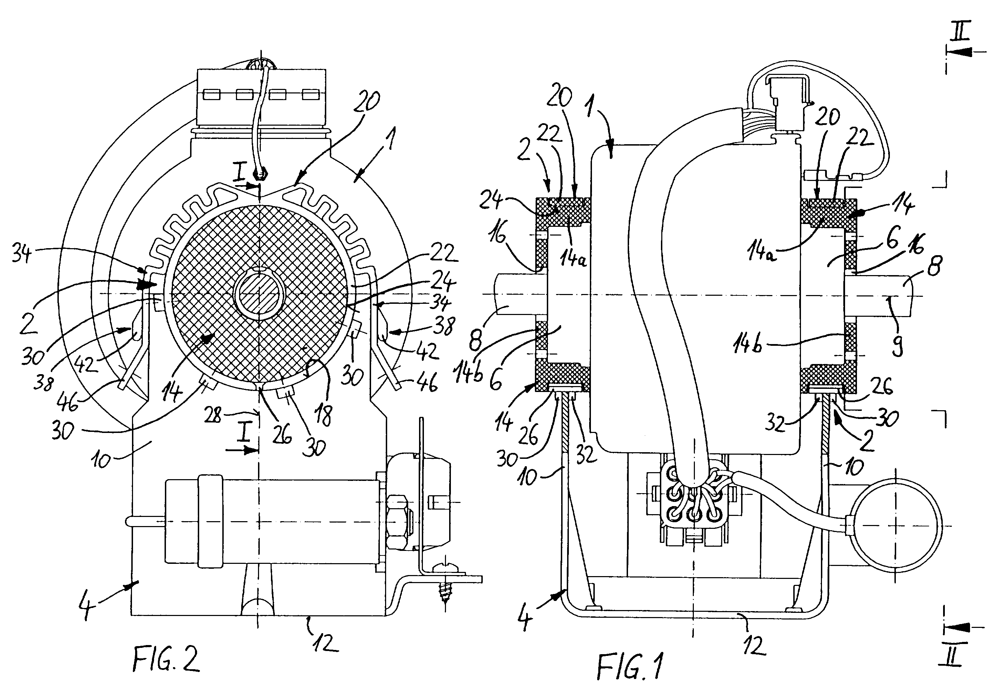

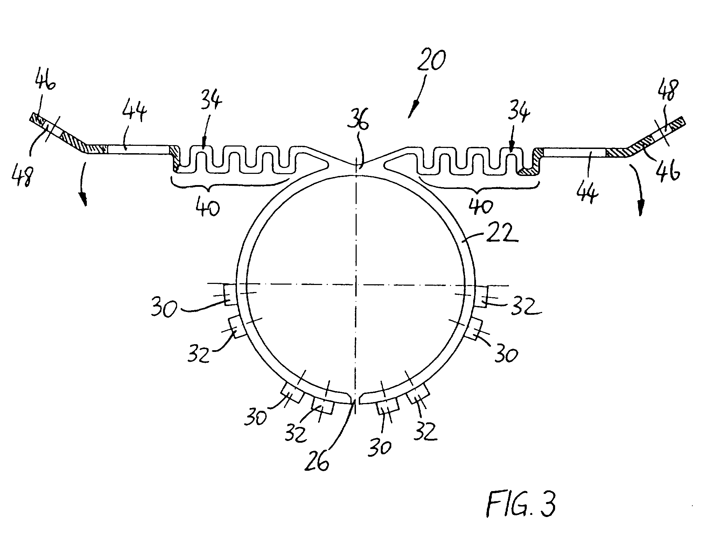

Das Dokument US-A-3 509 393 beschreibt zwei unterschiedliche Ausführungen einer Motor-Haltevorrichtung. Gemäß Fig. 2 und Fig. 1, linke Seite sind ein elastisches Aufnahmeelement (mounting ring) und ein separates Spannelement (attaching bands) vorgesehen, während gemäß Fig. 5 und Fig. 1, rechte Seite ein elastisches Aufnahmeelement einstückig angeformte, flexible Haltestreifen aufweist, so daß folglich kein gesondertes "Spannelement" vorhanden ist. Insofern entspricht nur die Ausführung nach Fig. 2 dem Oberbegriff des Anspruchs 1. Dabei ist aber das Spannelement als halbkreis- bzw. halbringförmige Bandschelle ausgebildet, wobei zwei sich über jeweils ca. 90° erstreckende Hälften jeweils mit Öffnungen auf Hakenabschnitte des Tragteils aufgehängt und anderseitig über eine Spannschraube miteinander verbunden sind. Das elastische Aufnahmeelement (resilient mounting ring) besteht aus einem inneren, auf dem Motor-Ansatz sitzenden Ring, einem äußeren Ring sowie aus mehreren, die beiden Ringe verbindenden elastischen Verbindungselementen. Dabei sitzt das Aufnahmeelement mit dem äußeren Ring direkt in der etwa halbkreisförmigen Aufnahmeöffnung des Tragteils und wird durch die Spannschelle in radialer Richtung fixiert. Zur Fixierung in axialer Richtung weist das elastische Aufnahmeelement an seinem äußeren Ring radiale Ansätze auf, die beidseitig an dem an die Aufnahmeöffnung angrenzenden Bereich des Tragteils (Schenkel) anliegen. Die Halterung und Lagefixierung des Aufnahmeelementes könnte aufgrund seiner notwendigerweise relativ hohen Elastizität und der daraus resultierenden leichten Verformbarkeit bei bestimmten Anwendungen unzureichend sein, beispielsweise bei schweren Motoren mit angetriebenen Teilen, die starke Vibrationen hervorrufen.

Eine weitere Halterungsvorrichtung ist aus der DE-C-1 175 785 bekannt. Dabei sitzt der Motor mit dem statorseitigen, zylindrischen Lageransatz in dem elastischen, ein Schwingelement zur Schwingungsdämpfung bildenden Aufnahmeelement, welches seinerseits an einem Haltebock des Traggestells gehaltert ist. Über die Art dieser Halterung ist jedoch nichts genaueres offenbart. Offensichtlich sitzt das Schwingelement mit einer Außenringnut direkt in einer Öffnung des Haltebockes, woraus eine schwierige bzw. zeitaufwendige Montage resultiert. Außerdem dürfte die Fixierung des Motors insbesondere in axialer Richtung unzureichend sein.

Der vorliegenden Erfindung liegt die Aufgabe zugrunde, eine Halterungsvorrichtung der gattungsgemäßen Art zu schaffen, die eine einfache und schnelle Montage bei gleichzeitig optimaler Motor-Fixierung in allen Raumrichtungen sowie bei geringem Herstellungsaufwand ermöglicht.

Erfindungsgemäß wird dies dadurch erreicht, daß das bzw. jedes Spannelement aus einem Ringteil und zwei mit dem Ringteil einstückig verbundenen, längselastischen Spannarmen besteht, wobei der Ringteil in axialer Richtung fixiert einerseits in einer Ringnut des elastischen Aufnahmeelementes und andererseits in der Aufnahmeöffnung der Wandung des Traggestells sitzt sowie in radialer Richtung über die Spannarme fixierbar ist.

Aufgrund des erfindungsgemäßen Ringteils des gesonderten, d. h. vom elastischen Aufnahmeelement unabhängigen Spannelementes handelt es sich um eine mittelbare Fixierung des Aufnahmeelementes in der Aufnahmeöffnung des Traggestells, indem einerseits der Ringteil - das Aufnahmeelement umfangsmäßig nahezu vollständig umschließend - in einer Ringnut des elastischen Aufnahmeelementes sitzt, und zwar in axialer Richtung im wesentlichen spielfrei. Andererseits sitzt das Ringteil ebenfalls axial fixiert in der etwa halbkreisförmigen Aufnahmeöffnung des Traggestells. Zur Arretierung sind - anstatt einer umständlich zu montierenden Spannverschraubung - zwei längselastische Spannarme vorgesehen, die erfindungsgemäß mit dem Ringteil einstückig verbunden sind. Diese Spannarme brauchen lediglich durch geringfügige Längsdehnung über Hakenverbindungen mit dem Traggestell verbunden zu werden.

Zur Montage braucht lediglich das elastische Aufnahmeelement axial auf den Lageransatz aufgesetzt, dann das Aufnahmeelement in radialer Richtung in die randoffene Aufnahmeöffnung eingesetzt und schließlich mit dem erfindungsgemäßen Spannelement fixiert zu werden. Dabei wird durch die Ausgestaltung des Spannelementes eine gute Fixierung des Aufnahmeelementes relativ zu dem Traggestell in allen Raumrichtungen (axial und radial) erreicht, wobei auch die Montage sehr einfach und schnell durchführbar ist. Zudem ist das Spannelement vorteilhafterweise als Kunststoff-Formteil sehr preiswert herstellbar, und zwar bevorzugt aus Polyoxymethylen (POM). Dieses Material zeichnet sich einerseits durch eine hohe Festigkeit und Steifigkeit sowie andererseits ein gutes elastisches Federungsvermögen aus.

Die erfindungsgemäße Halterungsvorrichtung eignet sich insbesondere zur Halterung eines Innenläufermotors in einem etwa C-förmigen Traggestell, wobei der Innenläufermotor zwei einander axial abgekehrte, statorseitige, im wesentlichen gleich ausgebildete Lageransätze aufweist, die jeweils gleichartig in einer von zwei axial entsprechend der Länge des Motors beabstandeten Aufnahmeöffnungen von zwei etwa parallelen Wandungen des Traggestells über jeweils ein elastisches Aufnahmeelement und mittels jeweils eines Spannelementes gehalten sind. Der Motor ist hierbei zwischen den beiden Halterungen axial optimal fixiert. Diese Ausführung eignet sich dann sehr gut für sogenannte "Fan-Coils", wobei es sich um Ventilatoren mit einem mittig angeordneten Motor mit beidseitig herausgeführter Welle handelt, wobei auf jedem Wellenende ein Lüfterrad angebracht ist. Derartige Ventilatoren werden insbesondere für Klimaanlagen verwendet.

Die Erfindung eignet sich allerdings grundsätzlich auch für Außenläufermotoren, wobei dann auf der Statorseite die erfindungsgemäße Halterungsvorrichtung und anderseitig eine übliche Lagerung der rotierenden Motorwelle vorgesehen sein kann.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll nun die Erfindung näher erläutert werden. Dabei zeigen:
- Fig. 1: eine teil-axialgeschnittene Seitenansicht eines über eine erfindungsgemäße Halterungsvorrichtung in einem Traggestell gehalterten Elektromotors (Teilschnitt in der Schnittebene I-I in Fig. 2),
- Fig. 2: eine längs der Schnittlinie II-II in Fig. 1 teilgeschnittene Stirnansicht und
- Fig. 3: eine teilgeschnittene, axiale Ansicht eines erfindungsgemäßen Spannelementes.

Gemäß Fig. 1 und 2 ist ein Elektromotor 1 über eine erfindungsgemäße Halterungsvorrichtung in einem Traggestell 4 (sog. "Motorkonsole") gehaltert. Im dargestellten, bevorzugten Ausführungsbeispiel handelt es sich bei dem Elektromotor 1 um einen Innenläufermotor, der zwei statorseitige, axiale, in entgegengesetzte Richtungen weisende, im wesentlichen zylindrische Lageransätze 6 (sog. Lagerschilde) aufweist (s. Fig. 1). Innerhalb der Lageransätze 6 sind nicht dargestellte Lager zur Rotationslagerung eines ebenfalls nicht erkennbaren Rotors angeordnet, wobei der Rotor 2 in entgegengesetzte Richtungen weisende, nach außen geführte Wellenenden 8 aufweist, auf denen beispielsweise jeweils ein nicht dargestelltes Lüfterrad montiert werden kann (sog. "Fan-Coil"). Bei dem Motor 1 kann es sich zudem mit Vorteil um einen jochbewickelten Motor handeln, dessen Statorwicklungen vollständig in Kunststoff eingegossen sind. Die Lageransätze bestehen bevorzugt aus Blechstanzteilen und sind jeweils an ihrem etwa kreisförmigen Umfangsrand vorzugsweise mit dem Kunststoff-Umguß der Statorwicklungen vergossen.

Das Traggestell 4 besteht aus zwei etwa parallelen, zur Motorachse 9 etwa senkrechten Wandungen 10 sowie einem diese "bügelartig" verbindenden Basisteil 12, wobei der Motor 1 zwischen den Wandungen 10 gehaltert wird.

Hierzu wird bevorzugt auf jeden Lageransatz 6 ein aus einem elastischen, schwingungsdämpfenden Material (z.B. Gummi) bestehendes Aufnahmeelement 14 axial aufgesetzt, wobei jedes Aufnahmeelement 14 bevorzugt kappenartig mit einem den Lageransatz 6 umfänglich umschließenden Umfangsabschnitt 14a und einem den Lageransatz 6 stirnendseitig umgreifenden, insbesondere eine zentrische Durchführöffnung 16 für das jeweilige Wellenende 8 aufweisenden Wandungsabschnitt 14b ausgebildet ist.

Erfindungsgemäß ist nun vorgesehen, daß jedes elastische Aufnahmeelement 14 in einer zur Motorachse 9 koaxialen, etwa halbkreisförmigen, einseitig in radialer Richtung randoffenen Aufnahmeöffnung 18 einer der Wandungen 10 des Traggestells 4 sitzt und dabei durch ein Spannelement 20 in axialer sowie radialer Richtung in der Aufnahmeöffnung 18 fixiert ist.

Wie sich nun durch Zusammenschau der Zeichnungsfiguren 1 bis 3 leicht nachvollziehen läßt, sitzt jedes Spannelement 20 bevorzugt mit einem Ringteil 22 derart in einer äußeren Ringnut 24 des zugehörigen Aufnahmeelementes 14, daß der Ringteil 22 relativ zu dem Aufnahmeelement 14 in axialer Richtung fixiert ist (abgesehen von einem geringen axialen Spiel). Der Ringteil 22 weist zweckmäßigerweise in seinem innerhalb der Aufnahmeöffnung 18 sitzenden Umfangsbereich einen seinen Umfangsverlauf unterbrechenden Schlitz 26 auf. Hierdurch ist der Ringteil 22 zur Montage, d.h. zum Aufsetzen auf das Aufnahmeelement 14, elastisch aufweitbar, so daß er auf einfache Weise in die Ringnut 24 eingesetzt werden kann. Sitzt aber das Aufnahmeelement 14 zusammen mit dem Ringteil 22 einmal in der Aufnahmeöffnung 18 der Wandung 10 des Traggestells 4, so ist der Ringteil 22 gegen Aufweiten durch die Aufnahmeöffnung 18 fixiert. Hierzu ist es besonders vorteilhaft, wenn der Schlitz 26 im Bereich der Symmetrieachse (vertikale Achse 28 in Fig. 2) der Aufnahmeöffnung 18 angeordnet ist. Der Ringteil 22 sitzt dann in axialer Richtung fixiert innerhalb der Ringnut 24, so daß axiale Relativbewegungen zwischen dem Aufnahmeelement 14 und dem Spannelement 20 weitgehend ausgeschlossen sind.

Zur Fixierung des Spannelementes 20 bzw. dessen Ringteils 22 relativ zu dem Traggestell 4 ist nun bevorzugt vorgesehen, daß der Ringteil 22 in seinem in die Aufnahmeöffnung 18 eingreifenden Umfangsbereich mindestens zwei radial nach außen abstehende und derart um die Dicke der Wandung 10 des Traggestells 4 axial beabstandet angeordnete Fixieransätze 30, 32 aufweist, daß die Wandung 10 mit dem an die Aufnahmeöffnung angrenzenden Bereich zwischen die Fixieransätze 30,32 eingreift, so daß der Ringteil 22 relativ zu der zwischen die Fixieransätze 30,32 eingreifenden Wandung 10 in axialer Richtung fixiert ist (abgesehen von eventuellem geringem Spiel).

Wie sich insbesondere aus Fig. 3 ergibt, sind in dem bevorzugten Ausführungsbeispiel mehrere, und zwar insbesondere vier, Paare von jeweils zwei axial beabstandeten Fixieransätzen 30,32 vorgesehen, wobei diese Paare über den etwa halbkreisförmigen Umfang der Aufnahmeöffnung 18 verteilt angeordnet sind, und wobei vorzugsweise die beiden Fixieransätze 30,32 jedes Paares relativ zueinander in Umfangsrichtung geringfügig versetzt angeordnet sind. Im dargestellten Ausführungsbeispiel beträgt dieser Versatz etwa 10° bis 20°, insbesondere etwa 15°.

Für die Fixierung in radialer bzw. zur Motorachse 9 senkrechter Richtung weist jedes Spannelement 20 bevorzugt zwei elastische Spannarme 34 auf, die einstückig mit dem Ringteil 22 verbunden sind, und zwar vorzugsweise an einer dem Schlitz 26 diametral gegenüberliegenden Anbindungsstelle 36 des Ringteil-Außenumfanges. Die Spannarme 34 sind gemäß Fig. 3 zunächst, d.h. vor der Montage, etwa tangential zum Ringteil 22 angeordnet. Zur Montage erfolgt dann eine elastische Verformung der Spannarme 34 um den Außenumfang des Ringteils 22 herum in Richtung der Wandung 10 des Traggestells 4. Somit sind die Spannarme 34 insbesondere unter elastischer Längsdehnung in entgegengesetzten Umfangsrichtungen führbar und dann jeweils über eine Hakenverbindung 38 (siehe Fig. 2) mit der Wandung 10 des Traggestells 4 verbindbar. Für ihre elastische Dehnbarkeit weisen die Spannarme 34 bevorzugt jeweils einen insbesondere mäanderförmig verlaufenden Bereich 40 auf (s. Fig. 3). Dabei verläuft in diesem Bereich 40 jeder Spannarm 34 vorzugsweise in radialer Richtung mäander- bzw. zickzackförmig hin und her. Zur Befestigung am Traggestell 4 weist jeder Spannarm 34 bevorzugt in seinem Endbereich eine auf einen Hakenansatz 42 der Traggestell-Wandung 10 aufhängbare Befestigungsöffnung 44 auf (in Fig. 3 erkennbar). Zudem ist es vorteilhaft, wenn zumindest einer der Spannarme 34, vorzugsweise aber jeder Spannarm 34, eine endseitige Grifflasche 46 aufweist, die insbesondere mit einem geeigneten Werkzeug, beispielsweise einer Zange, zum Spannen und Aufhängen ergreifbar ist. Dabei ist es zudem vorteilhaft, wenn die Grifflasche 46 eine ösenartige Lochöffnung 48 für das Werkzeug aufweist (s. ebenfalls Fig. 3).

Jedes Spannelement 20 ist bevorzugt als einstückiges Formteil (z.B. Spritzgießteil) aus Kunststoff gebildet, und zwar insbesondere aus Polyoxymethylen (POM), da sich dieses Material einerseits durch eine hohe Festigkeit und Steifigkeit auszeichnet und andererseits auch ein gutes Federungsvermögen besitzt.

Die Montage ist aufgrund der erfindungsgemäßen Halterungsvorrichtung 2 außerordentlich einfach und schnell durchführbar. Der vormontierte, d.h. mit den elastischen Aufnahmeelementen 14 und den Spannelementen 20 versehene Motor 1 braucht lediglich aus radialer Richtung in die Aufnahmeöffnungen 18 eingesetzt zu werden, und zwar so, daß die Wandungen 10 jeweils zwischen die Fixieransätze 30 und 32 eingreifen. Es wird dann jeweils einer der beiden Spannarme 34 mit der Befestigungsöffnung 44 auf den Hakenansatz 42 gehängt. Anschließend wird der jeweils zweite Spannarm 34 insbesondere mittels eines geeigneten Werkzeuges erfaßt und unter leichtem Zug herumgeführt und mit der Befestigungsöffnung 44 auf den Hakenansatz 42 aufgehängt. Auf diese Weise ist dann der Motor 1 bereits sicher positioniert und fixiert.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Vorrichtung zur Halterung eines Elektromotors (1) in einem Traggestell (4), wobei der Elektromotor (1) zumindest auf einer Axialseite mit einem statorseitigen, axialen Lageransatz (6) mittelbar über ein auf dem Lageransatz (6) sitzendes, elastisches Aufnahmeelement (14) an einer Wandung (10) des Traggestells (4) gehalten ist, wobei das elastische Aufnahmeelement (14) in einer zur Motorachse (9) koaxialen, etwa halbkreisförmigen, einseitig randoffenen Aufnahmeöffnung (18) der Wandung (10) des Traggestells (4) sitzt und durch ein Spannelement (20) in axialer und radialer Richtung in der Aufnahmeöffnung (18) fixiert ist,
**dadurch gekennzeichnet,** daß das bzw. jedes Spannelement (20) aus einem Ringteil (22) und zwei mit dem Ringteil (22) einstückig verbundenen, längselastischen Spannarmen (34) besteht, wobei der Ringteil (22) in axialer Richtung fixiert einerseits in einer Ringnut (24) des elastischen Aufnahmeelementes (14) und andererseits in der Aufnahmeöffnung (18) der Wandung (10) des Traggestells (4) sitzt sowie in radialer Richtung über die Spannarme (34) fixierbar ist.

2. Vorrichtung nach Anspruch 1,
**dadurch gekennzeichnet,** daß der Elektromotor (1) als Innenläufermotor ausgebildet ist und zwei einander axial abgekehrte, statorseitige, im wesentlichen gleich ausgebildete Lageransätze (6) aufweist, die jeweils gleichartig in einer von zwei axial um die Länge des Motors (1) beabstandeten Aufnahmeöffnungen (18) des Traggestells (4) über jeweils ein elastisches Aufnahmeelement (14) und mittels jeweils eines Spannelementes (20) gehalten sind.

3. Vorrichtung nach Anspruch 1 oder 2,
**dadurch gekennzeichnet,** daß die Spannarme (34) unter elastischer Dehnung in entgegengesetzten Umfangsrichtungen führbar und jeweils über eine Hakenverbindung (38) mit der Wandung (10) des Traggestells (4) verbindbar sind.

4. Vorrichtung nach einem der Ansprüche 1 bis 3,
**dadurch gekennzeichnet,** daß der Ringteil (22) des Spannelementes (20) in seinem in der Aufnahmeöffnung (18) sitzenden Umfangsbereich durch einen Schlitz (26) unterbrochen ist.

5. Vorrichtung nach einem der Ansprüche 1 bis 4,
**dadurch gekennzeichnet,** daß der Ringteil (22) in seinem in die Aufnahmeöffnung (18) eingreifenden Bereich mindestens zwei radial nach außen abstehende und derart um die Dicke der Wandung (10) des Traggestells (4) axial beabstandet angeordnete Fixieransätze (30,32) aufweist, daß der Ringteil (22) relativ zu der zwischen die Fixieransätze (30, 32) eingreifenden Wandung (10) in axialer Richtung fixiert ist.

6. Vorrichtung nach Anspruch 5,
**dadurch gekennzeichnet,** daß mehrere, insbesondere vier, Paare von jeweils axial beabstandeten Fixieransätzen (30,32) vorgesehen sind, wobei diese Paare über den etwa halbkreisförmigen Umfang der Aufnahmeöffnung (18) verteilt angeordnet sind, und wobei vorzugsweise die beiden Fixieransätze (30,32) jedes Paares relativ zueinander in Umfangsrichtung versetzt angeordnet sind.

7. Vorrichtung nach einem der Ansprüche 4 bis 6,
**dadurch gekennzeichnet,** daß die Spannarme (34) an einer Anbindungsstelle (36) des Ringteil-Außenumfanges mit dem Ringteil (22) einstückig verbunden sind, wobei der den Ringteil (22) unterbrechende Schlitz (26) bevorzugt der Anbindungsstelle (36) diametral gegenüberliegt.

8. Vorrichtung nach einem der Ansprüche 1 bis 7,
**dadurch gekennzeichnet,** daß die Spannarme (34) für ihre elastische Dehnbarkeit jeweils einen mäanderförmig verlaufenden Bereich (40) aufweisen.

9. Vorrichtung nach einem der Ansprüche 1 bis 8,
**dadurch gekennzeichnet,** daß jeder Spannarm (34) eine auf einen Hakenansatz (42) der Traggestell-Wandung (10) aufhängbare Befestigungsöffnung (44) aufweist.

10. Vorrichtung nach einem der Ansprüche 1 bis 9,
**dadurch gekennzeichnet,** daß zumindest einer der Spannarme (34) eine endseitige Grifflasche (46) aufweist.

11. Vorrichtung nach einem der Ansprüche 1 bis 10,
**dadurch gekennzeichnet,** daß das bzw. jedes elastische Aufnahmeelement (14) kappenartig mit einem den Lageransatz (6) umfänglich umschließenden Umfangsabschnitt (14a) und einem den Lageransatz (6) stirnendseitig umgreifenden, insbesondere eine zentrische Durchführöffnung (16) für eine Motorwelle (8) aufweisenden Wandungsabschnitt (14b) ausgebildet ist.

12. Vorrichtung nach einem der Ansprüche 1 bis 11,
**dadurch gekennzeichnet,** daß das bzw. jedes Spannelement (20) als einstückiges Formteil aus Kunststoff, insbesondere aus Polyoxymethylen (POM), gebildet ist.

## Claims

1. Device for holding an electric motor (1) in a supporting frame (4), the electric motor (1), at least on one axial side with a stator-side, axial bearing projection (6), being held indirectly, via an elastic receiving element (14) which rests on the bearing projection (6), on a wall (10) of the supporting frame (4), the elastic receiving element (14) resting in a receiving opening (18) in the wall (10) of the supporting frame (4), which receiving opening is coaxial with respect to the motor shaft (9), is approximately semicircular and is open-edged on one side, and being fixed in the receiving opening (18) in the axial and radial directions by a clamping element (20), characterized in that the or each clamping element (20) comprises a ring part (22) and two longitudinally elastic clamping arms (34) which are integrally connected to the ring part (22), the ring part (22), in the axial direction, on one side being fixed in an annular groove (24) in the elastic receiving element (14) and on the other side resting in the receiving opening (18) in the wall (10) of the supporting frame (4), and in the radial direction being fixable by means of the clamping arms (34).

2. Device according to Claim 1, characterized in that the electric motor (1) is designed as an internal rotor motor and has two stator-side bearing projections (6) which are axially remote from one another, are of substantially identical design and are each held in the same way in one of two receiving openings (18) in the supporting frame (4), which are spaced apart in the axial direction by the length of the motor (1), via in each case one elastic receiving element (14) and by means of in each case one clamping element (20).

3. Device according to Claim 1 or 2, characterized in that the clamping arms (34) can be guided in opposite circumferential directions under elastic extension and can each be connected to the wall (10) of the supporting frame (4) via a hook connection (38).

4. Device according to one of Claims 1 to 3, characterized in that the ring part (22) of the clamping element (20) is interrupted by a slot (26) in its circumferential region which rests in the receiving opening (18).

5. Device according to one of Claims 1 to 4, characterized in that the ring part (22), in its region which engages in the receiving opening (18), has at least two fixing projections (30, 32) which protrude radially outwards and are spaced apart in the axial direction by the thickness of the wall (10) of the supporting frame (4), in such a manner that the ring part (22) is fixed in the axial direction relative to the wall (10) engaging between the fixing projections (30, 32).

6. Device according to Claim 5, characterized in that a plurality of, in particular four, pairs of fixing projections (30, 32), which are in each case spaced apart in the axial direction, are provided, these pairs being distributed over the approximately semicircular circumference of the receiving opening (18), and the two fixing projections (30, 32) of each pair preferably being arranged offset in the circumferential direction with respect to one another,

7. Device according to one of Claims 4 to 6, characterized in that the clamping arms (34) are integrally connected to the ring part (22) at an attachment point (36) of the ring-part outer circumference, the slot (26) which interrupts the ring part (22) preferably being diametrically opposite the attachment point (36).

8. Device according to one of Claims 1 to 7, characterized in that the clamping arms (34) each have a region (40) which runs along a meandering course in order to provide its elastic extensibility.

9. Device according to one of Claims 1 to 8, characterized in that each clamping arm (34) has an attachment opening (44) which can be hung on a hook projection (42) on the supporting-frame wall (10).

10. Device according to one of Claims 1 to 9, characterized in that at least one of the clamping arms (34) has an end-side grip tab (46).

11. Device according to one of Claims 1 to 10, characterized in that the or each elastic receiving element (14) is designed in the manner of a cap, with a circumferential section (14a) which circumferentially surrounds the bearing projection (6) and a wall section (14b) which engages around the bearing projection (6) on the end side and in particular has a central passage opening (16) for a motor shaft (8).

12. Device according to one of Claims 1 to 11, characterized in that the or each clamping element (20) is formed as a single-piece moulding from plastic, in particular from polyoxymethylene (POM).

## Revendications

1. Dispositif pour le maintien d'un moteur électrique (1) dans un châssis de support (4), le moteur électrique (1) étant maintenu au moins sur un côté axial, par un prolongement axial de support (6) situé côté stator, indirectement au moyen d'un élément élastique de réception (14) placé sur le prolongement de support (6), sur une paroi (10) du châssis de support (4), l'élément élastique de support (14) étant disposé dans une ouverture de réception (18), coaxiale par rapport à l'axe du moteur (9), et sensiblement en forme de demi-cercle, de la paroi (10) du châssis de support (4), et étant fixé dans l'ouverture de réception (18) dans la direction axiale et radiale, au moyen d'un élément de tension (20), **caractérisé par le fait** que l'élément de tension (20), ou chacun d'eux, comprend une partie annulaire (22) et deux bras de tension (34) longitudinalement élastiques reliés d'une pièce à la partie annulaire (22), la partie annulaire (22) étant disposée de manière fixe dans la direction axiale d'une part dans une rainure annulaire (24) de l'élément élastique de réception (14), et d'autre part, dans l'ouverture de réception (18) de la paroi (10) du châssis de support (4), la partie annulaire (22) pouvant en outre être fixée dans la direction radiale au moyen des bras de tension (34).

2. Dispositif selon la revendication 1, **caractérisé par le fait** que le moteur électrique (1) est constitué en tant que moteur à rotor interne et comprend côté stator deux prolongements de support (6) axialement opposés et sensiblement identiques, ces prolongements étant respectivement maintenus de manière identique par un élément élastique de réception (14), et au moyen d'un élément de tension (20), dans l'une de deux ouvertures de réception (18) du châssis de support (4) séparées l'une de l'autre d'une longueur du moteur (1).

3. Dispositif selon la revendication 1 ou 2, **caractérisé par le fait** que les bras de tension (34) peuvent être guidés, en les étirant élastiquement, dans des directions circonférentielles contraires et peuvent être reliés à la paroi (10) du châssis de support (4) au moyen d'une liaison par crochet (38).

4. Dispositif selon l'une des revendications 1 à 3, **caractérisé par le fait** que la partie annulaire (22) de l'élément de tension (20) est interrompue par une fente (26) dans sa partie circonférentielle située dans l'ouverture de réception (18).

5. Dispositif selon l'une des revendications 1 à 4, **caractérisé par le fait** que la partie annulaire (22) présente dans sa région engagée dans l'ouverture de réception (18) au moins deux prolongements de fixation (30, 32) faisant radialement saillie vers l'extérieur et séparés axialement de la valeur de l'épaisseur de la paroi (10) du châssis de support (4), de manière à ce que la partie annulaire (22) soit fixée dans la direction axiale par rapport à la paroi (10) s'engageant entre les prolongements de fixation (30, 32).

6. Dispositif selon la revendication 5, **caractérisé par le fait** qu'on a prévu plusieurs, en particulier quatre, couples de prolongements de fixation (30, 32) respectivement séparés axialement, ces couples étant répartis sur la circonférence sensiblement en demi-cercle de l'ouverture de réception (18), les deux prolongements de fixation (30, 32) de chaque couple étant de préférence décalés entre eux dans la direction circonférentielle.

7. Dispositif selon l'une des revendications 4 à 6, **caractérisé par le fait** que les bras de tension (34) sont reliés d'une pièce à la partie annulaire (22) à l'endroit d'un point d'attache (36) de la circonférence extérieure de la partie annulaire, la fente (26) qui interrompt la partie annulaire (22) étant de préférence diamétralement opposée au point d'attache (36).

8. Dispositif selon l'une des revendications 1 à 7, **caractérisé par le fait** que les bras de tension (34) présentent respectivement une région (40) en forme de méandre pour permettre un étirement élastique.

9. Dispositif selon l'une des revendications 1 à 8, **caractérisé par le fait** que chaque bras de tension (34) présente une ouverture de fixation (44) pouvant être accrochée sur un prolongement en forme de crochet (42) de la paroi (10) du châssis de support.

10. Dispositif selon l'une des revendications 1 à 9, **caractérisé par le fait** qu'au moins l'un des bras de tension (34) comporte une patte de saisie terminale (46).

11. Dispositif selon l'une des revendications 1 à 10, **caractérisé par le fait** que l'élément de réception (14), respectivement chacun d'eux, comporte à la manière d'un capot une partie circonférentielle (14a) entourant le prolongement de support (6), ainsi qu'une section de paroi (14b) entourant le bout terminal du prolongement de support (6) et présentant en particulier une ouverture centrale de passage (16) pour l'arbre de moteur (8).

12. Dispositif selon l'une des revendications 1 à 11, **caractérisé par le fait** que l'élément de tension (20) ou chacun d'eux, a la forme d'un élément moulé d'une pièce en matière synthétique, en particulier en polyoxyméthylène.
